# EUROPÄISCHE PATENTSCHRIFT

(11) **EP 1 837 756 B1**
(45) Veröffentlichungstag und Bekanntmachung des Hinweises auf die Patenterteilung: **08.08.2018**
(21) Anmeldenummer: 07102458.2
(22) Anmeldetag: 15.02.2007
(51) Int. Cl.: G06F 9/445

(54) **Verbindungsmodul**
Connecting module
Module de raccordement

(30) Priorität: 20.03.2006 DE 102006013149
(43) Veröffentlichungstag der Anmeldung: 26.09.2007
(73) Patentinhaber: Vodafone Holding GmbH, 40213 Düsseldorf (DE)
(72) Erfinder: Giertz, Gerhard Guido, 40479 Düsseldorf (DE); Ackermann, Thomas, 50676 Köln (DE); Lien, Minh Tam, 40599 Düsseldorf (DE)
(74) Vertreter: Ring & Weisbrodt

(56) Entgegenhaltungen:
- EP-A1- 1 104 976
- WO-A-94/29968
- WO-A-2005/091745
- US-A1- 2004 095 382
- US-A1- 2004 214 601
- US-A1- 2005 198 485
- US-B1- 6 285 889

## Beschreibung

### Technisches Gebiet

Die Erfindung betrifft ein Verbindungsmodul zum Verbinden eines prozessorgesteuerten Gerätes als Kommunikationspartner mit einem anderen Kommunikationspartner über ein Mobilfunknetz, mit den Merkmalen des Oberbergriffs des Anspruchs 1. Ferner betrifft die Erfindung ein prozessorgesteuertes Gerät, insbesondere Computer, mit einer Schnittstelle zur Aufnahme eines Verbindungsmoduls zum Verbinden des prozessorgesteuerten Gerätes als Kommunikationspartner mit einem anderen Kommunikationspartner über ein Mobilfunknetz, mit den Merkmalen des Oberbergriffs des Anspruchs 8. Weiterhin umfasst die Erfindung Verfahren zur Steuerung einer Verbindung eines prozessorgesteuerten Gerätes mit einem anderen Kommunikationspartner über ein Mobilfunknetz mittels eines Verbindungsmoduls, mit den Merkmalen des Oberbergriffs des Anspruchs 10.

### Stand der Technik

MCC (Mobile Connect Card) sind Schnittstellenkarten, die beispielsweise in einen Personal Computer, einen mobilen Computer, einem so genannten Notebook, oder anderen Telematikgeräten eingesetzt werden, um über ein Mobilfunknetz mit einem Kommunikationspartner zu kommunizieren. Diese Karten bzw. Module sind bereits für PCMCIA-Schnittstellen (="Personal Computer Memory Card International Association") bekannt. PCMCIA sind Standards für Erweiterungskarten für Notebooks. Alle zur automatischen Konfiguration einer PCMCIA-Karte erforderlichen Treiber mit den nötigen Eigenschaften der Karte sind auf dieser in der "Card Information Structure",
abgekürzt "CIS" genannt, abgelegt. Die Daten auf der PCMCIA-Karte werden durch das Betriebssystem, welches im Computer üblicherweise auf der Festplatte gespeichert ist, ausgelesen.

Es sind ferner USB-Sticks bekannt, die als Speicher genutzt werden. USB ist die Abkürzung für "Universal Serial Bus". Dabei handelt es sich um ein Bussystem zur Verbindung eines Computers mit externen USB-Peripheriegeräten, wie einem Speicher, zum Austausch von Daten. Mit USB ausgestattete Geräte können im laufenden Betrieb miteinander verbunden werden. Dieser Vorgang wird mit Hot-Plugging bezeichnet. Das Protokoll des USB sieht eine automatische Erkennung von angeschlossenen Geräten und deren Eigenschaften vor.

Es ist bekannt in diesen Speichern Betriebssysteme in einem nichtflüchtigen Datenspeicher abzulegen. Das BIOS (= Basic Input Output System) eines Personal Computers (PC) kann so eingestellt werden, dass der PC beim Initialisieren zuerst auf die USB-Schnittstelle zugreift und den Datenspeicher dort ausliest. Der PC wird dann mit dem im USB-Stick befindlichen Betriebssystem gestartet. Das Betriebssystem übernimmt dabei die Steuerung der Hardware.

Bei den oben genannten MCCs tritt häufig das Problem auf, dass eine Konfiguration äußerst kompliziert abläuft. Je nach dem, welches Betriebssystem auf einem Computersystem installiert ist, beispielsweise Microsoft Windows 95, 98, ME, XP, 2000 oder Linux bzw. Unix oder MAC-OS, werden jeweils differenzierte Treiber benötigt. Auch die verwendete Hardware ist oft nicht ausreichend kompatibel zueinander. Die Installation und Konfiguration einer solchen Schnittstellenkarte gestaltet sich daher nicht anwenderfreundlich.

Oftmals steht einem Anwender ein Computersystem eines anderen zur Verfügung. Dieser möchte jedoch nicht, dass der Anwender beispielsweise auf Daten über das Internet zugreift. Der Anwender kann daher z.B. nicht ohne weiteres in das Internet oder seinen Heimatserver mit dem Computersystem des anderen kontaktieren.

Die US 2004/0095382 A1 offenbart ein portables Speichergerät, welches aus einem mobilen Speicher mit einer Schnittstelle zu einem Computer sowie einer in dem Speicher vorgesehenen Datenverwaltungssoftware besteht. Mit diesem Gerät kann ein Benutzer auf dem mobilen Speicher gespeicherte Programme, individuelle Systemeinstellungen und ein Betriebssystem auf einen Computer übertragen.

Die WO 94/29968 A1 offenbart ein als PCMCIA-Karte ausgebildetes Verbindungsmodul, welches in einem mobilen Computer verwendbar ist. Das Verbindungsmodul kann sowohl als Telefoneinheit, als auch als Datenübermittlungseinheit fungieren, um so eine Verbindung mit einem Kommunikationspartner herzustellen, wobei die PCMCIA-Karte die Verbindung aufbaut.

Die EP 1 104 976 A1 offenbart eine drahtlose Kommunikationseinheit, welche beispielsweise mit einem Computer verbunden werden kann. Die drahtlose Kommunikationseinheit verfügt sowohl über eine Schnittstelle zum Computer beispielsweise per USB- oder SCSI-Anschluss als auch über eine Schnittstelle zu einem Mobilfunknetz. Des Weiteren kann die Kommunikationseinheit Benutzerdaten als auch ein Betriebssystem enthalten, welches von der Kommunikationseinheit auf den Computer heruntergeladen werden kann.

### Offenbarung der Erfindung

Aufgabe der Erfindung ist es, eine einfache Möglichkeit zu schaffen, überall eine Verbindung zwischen einem prozessorgesteuerten Gerät, wie einem Computer, und einem Mobilfunknetz herzustellen, ohne jedes Mal unbedingt ein individuelles Gerät mitführen zu müssen, sofern an einem anderen Ort ein entsprechendes Gerät zur Verfügung steht insbesondere derart, dass ein Benutzer in seiner gewohnten Benutzerumgebung arbeiten kann und ferner das Betriebssystem derart konfiguriert wird, dass es die Steuerung einer Verbindung zwischen dem Verbindungsmodul und dem Mobilfunknetz übernehmen kann.

Erfindungsgemäß wird die Aufgabe dadurch gelöst, dass bei einem Verbindungsmodul der eingangs genannten Art die Merkmale des Anspruchs 1 vorgesehen sind.

Weiterhin wird die Aufgabe bei einem Verfahren der eingangs genannten Art gelöst durch die Merkmale des Anspruchs 10.

Die Erfindung beruht auf dem Prinzip, dass das Verbindungsmodul immer ein Betriebssystem integriert hat. Daher ist es nicht mehr erforderlich, auf die Konfiguration, Treiber oder dergleichen von prozessorgesteuerten Geräten, wie Computersystemen, zurückzugreifen. Ein Anwender führt lediglich ein Verbindungsmodul mit sich, um von überall her über das Mobilfunknetz auf andere z.B. Computer, Server oder das Internet zugreifen zu können. Einzige Voraussetzung für das Computersystem ist, dass eine geeignete Schnittstelle für das erfindungsgemäße Verbindungsmodul vorgesehen ist. Nach dem erfindungsgemäßen Verfahren wird für einen Anwender eine Möglichkeit geschaffen, ein prozessorgesteuertes Gerät zu wechseln, ohne auf seine gewohnte Betriebssystemumgebung verzichten zu müssen. Die Verbindung über das Mobilfunknetz bleibt für ihn in gewohnter Weise erhalten.

Vorteilhafte Ausgestaltungen der Erfindung bestehen deswegen darin, dass standardisierte Schnittstelle zwischen dem prozessorgesteuerten Gerät und dem Verbindungsmodul vorgesehen sind. Gemäß erfindungsgemäßen Ausführungen sind USB- und PCMCIA-Schnittstellen zur Verbindung vorgeschlagen.

Eine vorteilhafte Ausgestaltung des erfindungsgemäßen Verbindungsmoduls besteht darin, dass Mittel zum Auslesen des Speichers des Verbindungsmoduls in einem Initalisierungsprozess durch das prozessorgesteuerte Gerät beim Einschalten vorgesehen sind. Durch geeignetes Einstellen des BIOS z.B. bei modernen Computersystemen kann ausgewählt werden welches Modul für einen Ladevorgang zuerst angesprochen wird. Dies kann eine Festplatte oder ein CD-ROM sein, aber auch ein USB-Modul. Sofern das USB-Modul ausgewählt ist, wird das Betriebssystem des Verbindungsmoduls nach der Computerinitialisierung, bei der die Hardware des prozessorgesteuerten Gerätes und die angeschlossenen Geräte geprüft werden, In einen Arbeitsspeicher des prozessorgesteuerten Geräts geladen. Das Betriebssystem prüft und konfiguriert sich weitestgehend automatisch. Ein solches schnell selbstkonfigurierendes Betriebssystem wird beispielsweise von der Knoppix-User-Group angeboten.

Gemäß einer vorteilhaften Ausbildung des erfindungsgemäßen Verbindungsmoduls enthält der Speicher des Verbindungsmoduls ein Nutzerprofil. Der Speicher ist dabei vorzugsweise als nichtflüchtiger Speicher ausgebildet, so dass auch bei fehlender Versorgungsspannung ein gespeichertes Nutzerprofil erhalten bleibt. Durch das Nutzerprofil kann das Betriebssystem an individuelle Bedürfnisse eines bestimmten Nutzers angepasst werden. Bei Bedarf können auch mehrere Nutzerprofile in dem Speicher des Verbindungsmoduls gespeichert werden. Sobald das prozessorgesteuerte Gerät eingeschaltet wird und initialisiert ist, wird das an den Nutzer angepasste Betriebssystem in den Arbeitsspeicher geladen. Das Nutzerprofil umfasst auch individuell gespeicherte Dateien, wie z.B. Programme, Adressen oder Texte.

Gemäß einer bevorzugten Variante ist das prozessorgesteuerte Gerät als Computer ausgebildet. Neben zahlreichen anderen prozessorgesteuerten Geräten oder Maschinen ist der Computer ein besonderes Ausführungsbeispiel für den sich ein solches erfindungsgemäßes Verbindungsmodul eignet. Denn es besteht besonderer Bedarf mittels Computer mit anderen Geräten möglichst einfach zu kommunizieren. Sobald ein Verbindungsmodul in den Computer eingesetzt ist, kann die Kommunikation auf Kosten des Inhabers des Verbindungsmoduls über das Mobilfunknetz erfolgen. Damit wird das Konto des Computerbesitzers, der nicht auch Besitzer des Verbindungsmoduls sein muss, nicht unnötig belastet.

Eine besondere Ausbildung des erfindungsgemäßen Verbindungsmoduls ergibt sich ferner dadurch, dass ein Verbindungsadapter zwischen dem prozessorgesteuerten Gerät und dem Verbindungsmodul vorgesehen ist. Dieser Verbindungsadapter passt bei unterschiedlich ausgebildeten Schnittstellen diese aneinander an, damit Verbindungsmodul und prozessorgesteuertes Gerät zusammenarbeiten können. Dieser spezielle Verbindungsadapter kann beispielsweise als Kabel, Funk-(insbesondere nach dem Bluetooth-Standard), oder Infrarotadapter ausgebildet sein. Eine weitere vorteilhafte Ausgestaltung der Erfindung ergibt sich, indem das Verbindungsmodul einen nichtflüchtigen Datenspeicher zur Aufnahme eines zusätzlichen Betriebssystems aufweist, wobei das zusätzliche Betriebssystem alternativ zum Betriebssystem des prozessorgesteuerten Geräts vorgesehen ist. Durch diese Maßnahme kann das Verbindungsmodul beispielsweise für unterschiedliche Computertypen verwendet werden, für die jeweils ein eigenes Betriebssystem erforderlich ist. Auch kann ein Anwender das Betriebssystem wählen, welches ihm angenehmer ist, weil er sich damit besser auskennt.

Gemäß einer vorteilhaften Ausstattung des erfindungsgemäßen prozessorgesteuerten Geräts ist die Schnittstelle zum Verbindungsmodul als USB-und/oder PCMCIA-Schnittstelle ausgebildet. USB- und PCMCIA-Schnittstellen sind standardisierte Schnittstellen. Dadurch wird eine Verbindung zwischen Verbindungsmodul und dem prozessorgesteuerten Gerät erheblich erleichtert.

Weitere Vorteile ergeben sich aus dem Gegenstand der Unteransprüche, sowie der Zeichnung mit der dazugehörigen Beschreibung.

Kurze Beschreibung der Zeichnung
- Fig. 1: zeigt in einer schematischen Prinzipskizze mehrere prozessorgesteuerte Geräte, welche ggf. über ein erfindungsgemäßes Verbindungsmodul mit dem Mobilfunknetz verbunden sind.
- Fig.2: zeigt in einer schematischen Prinzipskizze einen Ausschnitt eines prozessorgesteuerten Gerätes, bei dem ein Verbindungsmodul eingesteckt ist.
- Fig.3: zeigt schematisch den Ablauf eines erfindungsgemäßen Verfahrens.

### Bevorzugtes Ausführungsbeispiel

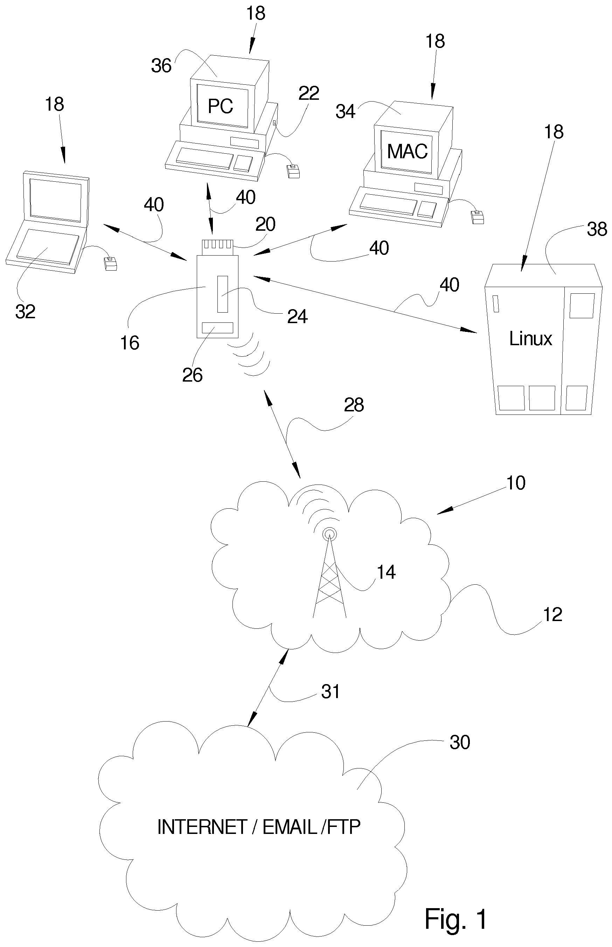

In Fig. 1 wird mit 10 ein Mobilfunknetz bezeichnet. Das Mobilfunknetz 10 wird durch eine Wolke 12 und einen Funkmast 14 symbolisiert. Über ein Verbindungsmodul 16 kann mit verschiedenen prozessorgesteuerten Geräten 18 auf Dienste des Mobilfunknetzes 10, wie z.B. GPRS, HSCSD, SMS, MMS, Email oder WAP, zurückgegriffen werden. Im vorliegenden Ausführungsbeispiel verfügt das Verbindungsmodul 16 über eine USB-Schnittstelle 20, die in einen entsprechenden Eingang 22 der prozessorgesteuerten Geräte 18 eingesetzt wird. Andere Schnittstellen, wie z.B. Infrarot-, Kabel, oder Bluetooth-Funkschnittstellen, sind für die Erfindung grundsätzlich ebenfalls verwendbar.

Das Verbindungsmodul 16 enthält ferner einen nichtflüchtigen Speicher 24, in dem ein Betriebssystem "OS" abgelegt ist. Mittels eines Empfangs- und Sendemoduls 26 wird eine Funkverbindung 28 zum Mobilfunknetz 10 hergestellt. Über die Funkverbindung 28 mit dem Mobilfunknetz 10 kann beispielsweise auf ein anderes Netz 30, wie das Internet, oder einen anderen Kommunikationspartner zugegriffen werden, Pfeil 31.

Die prozessorgesteuerten Geräte 18 sind in diesem Ausführungsbeispiel z.B. ein Notebook 32, ein Apple-Macintosh-Computer 34, ein Personalcomputer 36 oder ein Linux-Server 38. Grundsätzlich sind jedoch beliebige prozessorgesteuerten Geräte 18 verwendbar, die jeweils einen geeigneten Eingang 22 für ein Verbindungsmodul 16 enthalten.

Ohne Verbindungsmodul 16 wird üblicherweise immer das normale Standard-Betriebssytem des jeweiligen prozessorgesteuerten Gerätes 18 verwendet. Je nach dem, in welchem prozessorgesteuertem Gerät 18 das Verbindungsmodul 16 nun eingesetzt wird, kommt das Betriebssystem "OS" des Verbindungsmoduls 16 zum Einsatz. Pfeile 40 deuten an, dass das Verbindungsmodul 16 in jedes der prozessorgesteuerten Geräte 18 eingesetzt werden kann. Darüber wird dann eine Funkverbindung 28 zwischen dem prozessorgesteuertem Gerät 18 zum Mobilfunknetz 10 aufgebaut.

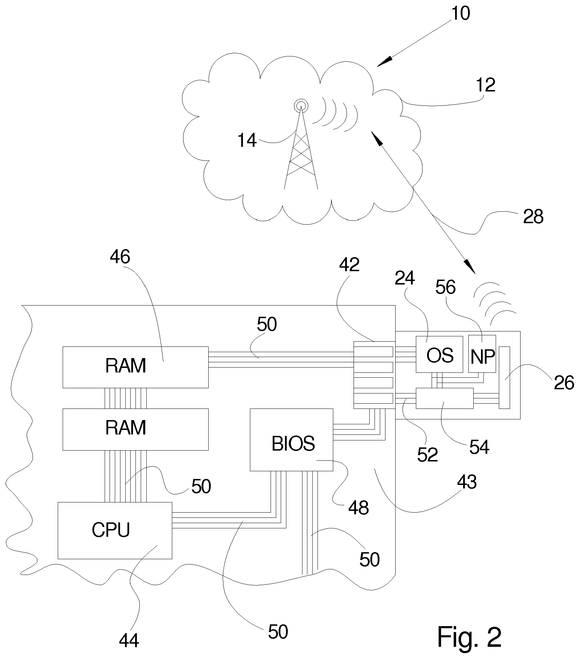

In Fig. 2 wird in einer schematischen Prinzipskizze ein Ausschnitt einer Platine 43 eines prozessorgesteuerten Gerätes 18 dargestellt, bei dem ein Verbindungsmodul 16 in eine USB-Schnittstelle 42 eingesteckt ist. Bei dem prozessorgesteuerten Gerät 18 handelt es sich im vorliegenden Fall beispielhaft um einen Personalcomputer 36. Der Personalcomputer 36 enthält vereinfacht insbesondere einen Prozessor 44 - auch mit CPU bezeichnet - , einen flüchtigen Arbeitsspeicher 46 - auch mit RAM bezeichnet - und einen nichtflüchtigen Speicher 48 - auch mit BIOS bezeichnet. Die soeben genannten Komponenten 44, 46, 48 stehen über ein Datenbus-System 50 miteinander in Verbindung. Das Datenbus-System 50 besteht aus Daten- und Steuerleitungen.

In dem nichtflüchtigen Speicher 48 befinden sich Initialisierungsroutinen, die beim Einschaltvorgang die Hard- und Software des Personalcomputers 36 prüft und in einen definierten Zustand versetzt. Dazu gehört auch das Festlegen, von welchem angeschlossenen Gerät das Betriebssystem in den Arbeitsspeicher 46 geladen werden soll. In diesem Fall sind die Initialisierungsroutinen derart eingestellt, dass das Betriebssystem "OS" aus dem nichtflüchtigen Speicher 24 über die USB-Schnittstelle 20, 42 in den Arbeitsspeicher 46 geladen wird. Das Verbindungsmodul weist dazu ebenfalls ein geeignetes Bussystem 52 auf, welches über die USB-Schnittstelle 20, 42 eine Verbindung zum Datenbus-System 50 des Personalcomputers 36 erhält.

In einem nichtflüchtigen Speicher 54 des Verbindungsmoduls 16 befinden sich ferner geeignete Treiber, welche erforderlich sind, um das angeschlossene Verbindungsmodul 16 mit dem Personalcomputer 36 und dem Mobilfunknetz 10 kommunizieren zu lassen. In einem wieder-beschreibbaren aber nichtflüchtigen Speicher 56 ist ein Nutzerprofil "NP" abgelegt. Dieses Nutzerprofil "NP" kann an die Bedürfnisse eines Nutzers angepasst werden. Beim Laden des Betriebssystems "OS" wird dieses gleichzeitig entsprechend des gespeicherten Nutzerprofils "NP" konfiguriert.

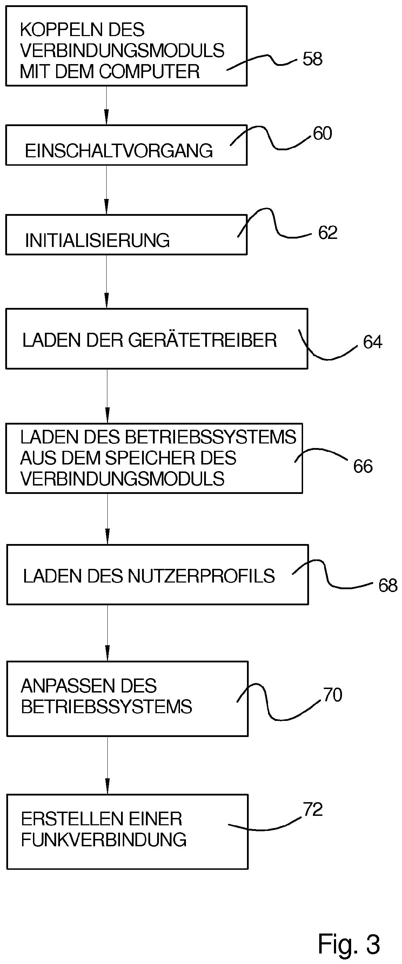

Anhand von Fig. 3 sollen die Abläufe ansatzweise erläutert werden, die in den Geräten 16, 36 ablaufen, wie sie in den Figuren 1 und 2 dargestellt sind. Zunächst wird das Verbindungsmodul 16 mit dem Personalcomputer 36 gekoppelt - symbolisiert durch Kasten 58. Das Verbindungsmodul 16 wird mit seiner USB-Schnittstelle 20 in die entsprechende Schnittstelle 42 des Personalcomputers 36 gesteckt. Sollte keine geeignete

Kopplungsmöglichkeit vorgesehen sein, können ggf. auch Kopplungs- bzw. Verbindungsadapter verwendet werden, die eine Verbindung zwischen Verbindungsmodul 16 und dem Personalcomputer 36 herstellen. Anschließend wird der Personalcomputer 36 eingeschaltet, Kasten 60. Der Personalcomputer 36 versorgt dabei über die USB-Schnittstelle 20, 42 das Verbindungsmodul 16 mit der erforderlichen Spannung. Nach dem Einschaltvorgang 60 erfolgt die Initialisierung - Kasten 62 - des Personalcomputers 36. Dabei wird durch Initialisierungsroutinen geprüft, welche Hard- bzw. Software vorhanden ist und getestet, ob diese funktionstüchtig ist. Weiterhin wird die Hardware in einen definierten Zustand versetzt. Danach werden, sofern erforderlich, Gerätetreiber geladen, Kasten 64. Dabei werden die angeschlossenen Geräte, wie das Verbindungsmodul 16, in die Struktur des Personalcomputers 36 eingebunden. Ist bei der Initialisierung 62 vereinbart, dass das Betriebssystem "OS" aus dem Speicher 24 des Verbindungsmoduls 16 geladen werden soll, wird das Betriebssystem "OS" in den Arbeitsspeicher 46 des Personalcomputers 36 transferiert, Kasten 66. Der Prozessor 44 kann auf den Arbeitsspeicher 46 zugreifen und mit dem nun geladenen Betriebssystem arbeiten. Das Betriebssystem "OS", welches vom Verbindungsmodul 16 geladen wurde, übernimmt nunmehr im Zusammenwirken mit dem Prozessor 44, die Steuerung des Personalcomputers 36.

Damit das Betriebssystem nicht bei jedem Einschaltvorgang 60 für einen Benutzer konfiguriert werden muss, werden spezielle Konfigurationen und bereits vorhandene Daten eines Nutzers aus dem Speicher 56 übernommen, Kasten 68. Dieses Nutzerprofil "NP" passt das Betriebssystem "OS" an die Bedürfnisse des Nutzers an, Kasten 70. Danach erstellt das Verbindungsmodul 16, sofern gewünscht, eine Funkverbindung 28 zu dem Mobilfunknetz 10, Kasten 72. Der Nutzer kann nun mit seinem Personalcomputer 36 über das Mobilfunknetz 10, beispielsweise auf das Internet, zugreifen.

## Patentansprüche

1. Verbindungsmodul (16) zum Verbinden eines prozessorgesteuerten Gerätes (18) als Kommunikationspartner mit einem anderen Kommunikationspartner über ein Mobilfunknetz (10) mit einer Funkschnittstelle (26) zu dem Mobilfunknetz (10), einer Schnittstelle (20) zu dem prozessorgesteuerten Gerät (18) und einem nichtflüchtigen Datenspeicher, welcher ein Betriebssystem, OS, das nach dem Laden in einen Arbeitsspeicher (46) des prozessorgesteuerten Gerätes (18) die Steuerung des prozessorgesteuerten Gerätes (18) übernimmt, aufweist, **dadurch gekennzeichnet, dass** der nichtflüchtige Datenspeicher ferner wenigstens ein Nutzerprofil, NP, zur Anpassung des Betriebssystems, OS, an individuelle Bedürfnisse eines Nutzers aufweist, dass das in den Arbeitsspeicher (46) des prozessorgesteuerten Gerätes (18) geladene Betriebssystem entsprechend dem Nutzerprofil, NP, konfiguriert ist, und dass das Betriebssystem eingerichtet ist, nach dem Laden in den Arbeitsspeicher (46) des prozessorgesteuerten Gerätes (18) neben der Steuerung des prozessorgesteuerten Gerätes (18) ferner eine Steuerung der Verbindung zwischen dem Verbindungsmodul (16) und dem Mobilfunknetz (10) zu übernehmen.

2. Verbindungsmodul (16) nach Anspruch 1, **dadurch gekennzeichnet, dass** das Verbindungsmodul (16) über eine USB-Schnittstelle (20, 42) mit dem prozessorgesteuerten Gerät (18) verbunden ist.

3. Verbindungsmodul (16) nach Anspruch 1, **dadurch gekennzeichnet, dass** das Verbindungsmodul (16) über eine PCMCIA-Schnittstelle mit dem prozessorgesteuerten Gerät (18) verbunden ist.

4. Verbindungsmodul (16) nach einem der Ansprüche 1 bis 3, **gekennzeichnet durch** Mittel (44, 50, 52) zum Auslesen des Speichers (24) des Verbindungsmoduls (16) in einem Initalisierungsprozess durch das prozessorgesteuerte Gerät (18) beim Einschalten (60).

5. Verbindungsmodul (16) nach einem der Ansprüche 1 bis 4, **dadurch gekennzeichnet, dass** das prozessorgesteuerte Gerät (18) als Computer (32, 34, 36, 38) ausgebildet ist.

6. Verbindungsmodul (16) nach einem der Ansprüche 1 bis 5, **dadurch gekennzeichnet, dass** ein Verbindungsadapter zwischen dem prozessorgesteuerten Gerät (18) und dem Verbindungsmodul (16) vorgesehen ist.

7. Verbindungsmodul (16) nach einem der Ansprüche 1 bis 6, **dadurch gekennzeichnet, dass** das Verbindungsmodul (16) einen nichtflüchtigen Datenspeicher zur Aufnahme eines zusätzlichen Betriebssystem, OS, aufweist, wobei das zusätzliche Betriebssystem, OS, alternativ zum Betriebssystem, OS, für das prozessorgesteuerte Gerät (18) vorgesehen ist.

8. Prozessorgesteuertes Gerät (18), insbesondere Computer (32, 34, 36, 38), mit einem Verbindungsmodul (16), besagtes Gerät (18) mit einer Schnittstelle (42) zur Aufnahme des Verbindungsmoduls (16) zum Verbinden des prozessorgesteuerten Gerätes (18) als Kommunikationspartner mit einem anderen Kommunikationspartner über ein Mobilfunknetz (10), wobei das Verbindungsmodul (16) eine Funkschnittstelle (26) zu dem Mobilfunknetz (10), eine Schnittstelle (20) zu dem prozessorgesteuerten Gerät (18) und einen nichtflüchtigen Datenspeicher, welcher ein Betriebssystem, OS, das nach dem Laden in einen Arbeitsspeicher (46) des prozessorgesteuerten Gerätes (18) die Steuerung des prozessorgesteuerten Gerätes (18) übernimmt, aufweist, **dadurch gekennzeichnet, dass** der nichtflüchtige Datenspeicher ferner wenigstens ein Nutzerprofil (NP) zur Anpassung des Betriebssystems, OS, an individuelle Bedürfnisse eines Nutzers aufweist, dass das in den Arbeitsspeicher (46) des prozessorgesteuerten Gerätes (18) geladene Betriebssystem entsprechend dem Nutzerprofil (NP) konfiguriert ist, und dass das Betriebssystem eingerichtet ist, nach dem Laden in den Arbeitsspeicher (46) des prozessorgesteuerten Gerätes (18) neben der Steuerung des prozessorgesteuerten Gerätes (18) ferner eine Steuerung der Verbindung zwischen dem Verbindungsmodul (16) und dem Mobilfunknetz (10) zu übernehmen.

9. Prozessorgesteuertes Gerät (18) nach Anspruch 8, **dadurch gekennzeichnet, dass** die Schnittstelle als USB- (42) und/oder PCMCIA-Schnittstelle ausgebildet ist.

10. Verfahren zur Steuerung einer Verbindung eines prozessorgesteuerten Gerätes (18) mit einem anderen Kommunikationspartner über ein Mobilfunknetz (10) mittels eines Verbindungsmoduls (16) nach einem der Ansprüche 1 bis 9, umfassend:
(a) Koppeln des prozessorgesteuerten Gerätes (18) mit dem Verbindungsmodul (16) über eine Schnittstelle (20, 42);
(b) Laden eines im Verbindungsmodul (16) gespeicherten Betriebssystems, OS, in einen Arbeitsspeicher (46) des prozessorgesteuerten Gerätes (18) und gleichzeitige Konfiguration des Betriebssystems, OS, entsprechend dem Nutzerprofil (NP) während eines Initialisierungsprozesses des prozessorgesteuerten Gerätes (18);
(c) Steuerung des prozessorgesteuerten Gerätes (18) und der Verbindung zwischen dem Verbindungsmodul (16) und dem Mobilfunknetz (10) durch das Betriebssystem, OS.

## Claims

1. A connecting module (16) for connecting a processor controlled device (18) as communication partner with another communication partner via a mobile radio network (10), comprising a radio interface (26) to the mobile radio network (10), an interface (20) to the processor controlled device (18) and a non-volatile data memory which comprises an operating system, OS, which after having been loaded into a working memory (46) of the processor controlled device (18) will assume the control of the processor controlled device (18), **characterized in that** the non-volatile data memory further comprises at least one user profile, NP, for adapting the operating system, OS, to individual requirements of a user, that the operating system loaded into the working memory (46) of the processor controlled device (18) is configured according to the user profile, NP, and that after having been loaded into the working memory (46) of the processor controlled device (18) the operating system is adapted to assume, apart from the control of the processor controlled device (18), a control of the connection between the connecting module (16) and the mobile radio network (10).

2. A connecting module (16) according to claim 1, **characterized in that** the connecting module (16) is connected via a USB interface (20, 42) to the processor controlled device (18).

3. A connecting module (16) according to claim 1, **characterized in that** the connecting module (16) is connected via a PCMCIA interface to the processor controlled device (18).

4. A connecting module (16) according to one of the claims 1 to 3, **characterized by** means (44, 50, 52) for reading out the memory (24) of the connecting module (16) in an initialisation process by means of the processor controlled device (18) upon switch-on (60).

5. A connecting module (16) according to one of the claims 1 to 4, **characterized in that** the processor controlled device (18) is designed as a computer (32, 34, 36, 38).

6. A connecting module (16) according to one of the claims 1 to 5, **characterized in that** a connection adapter is provided between the processor controlled device (18) and the connecting module (16).

7. A connecting module (16) according to one of the claims 1 to 6, **characterized in that** the connecting module (16) comprises a non-volatile data memory for receiving an additional operating system, OS, wherein the additional operating system, OS, is provided as an alternative to the operating system, OS, for the processor controlled device (18).

8. A processor controlled device (18), in particular a computer (32, 34, 36, 38) comprising a connecting module (16), the said device (18) comprising an interface (42) for receiving the connecting module (16) for connecting the processor controlled device (18) as communication partner with another communication partner via a mobile radio network (10), the connecting module (16) comprising a radio interface (26) to the mobile radio network (10), an interface (20) to the processor controlled device (18) and a non-volatile data memory which comprises an operating system, OS, which after having been loaded into a working memory (46) of the processor controlled device (18) will assume the control of the processor controlled device (18), **characterized in that** the non-volatile data memory further comprises at least one user profile (NP) for adapting the operating system, OS, to individual requirements of a user, that the operating system loaded into the working memory (46) of the processor controlled device (18) is configured according to the user profile (NP) and that after having been loaded into the working memory (46) of the processor controlled device (18) the operating system is adapted to assume, apart from the control of the processor controlled device (18), a control of the connection between the connecting module (16) and the mobile radio network (10).

9. A processor controlled device (18) according to claim 8, **characterized in that** the interface is designed as USB interface (42) and/or as PCMCIA interface.

10. A method for controlling a connection between a processor controlled device (18) and another communication partner via a mobile radio network (10) by means of a connecting module (16) according to one of the claims 1 to 9, comprising:
(a) coupling the processor controlled device (18) to the connecting module (16) via an interface (20, 42);
(b) loading an operating system, OS, stored in the connecting module (16) into a working memory (46) of the processor controlled device (18) and simultaneously configuring the operating system, OS, according to the user profile (NP) during an initialization process of the processor controlled device (18);
(c) controlling the processor controlled device (18) and the connection between the connecting module (16) and the mobile radio network (10) by means of the operating system, OS.

## Revendications

1. Module de raccordement (16) destiné à relier un dispositif commandé par processeur (18) comme partenaire de communication à un autre partenaire de communication via un réseau radio mobile (10), comprenant une interface sans fil (26) avec le réseau radio mobile (10), une interface (20) avec le dispositif commandé par processeur (18) et une mémoire de données non volatile, qui comprend un système d'exploitation, OS, qui, après avoir été chargé dans une mémoire de travail (46) du dispositif commandé par processeur (18), assume la commande du dispositif commandé par processeur (18), **caractérisé en ce que** la mémoire de données non volatile comprend en outre au moins un profil utilisateur, NP, pour adapter le système d'exploitation, OS, aux besoins individuels d'un utilisateur, que le système d'exploitation chargé dans la mémoire de travail (46) du dispositif commandé par processeur (18) est configuré de manière correspondante au profil utilisateur, NP, et que le système d'exploitation, après avoir été chargé dans la mémoire de travail (46) du dispositif commandé par processeur (18), est adapté à assumer, outre la commande du dispositif commandé par processeur (18), aussi la commande de la connexion entre le module de raccordement (16) et le réseau radio mobile (10).

2. Module de raccordement (16) selon la revendication 1, **caractérisé en ce que** le module de raccordement (16) est relié au dispositif commandé par processeur (18) via une interface USB (20, 42).

3. Module de raccordement (16) selon la revendication 1, **caractérisé en ce que** le module de raccordement (16) est relié au dispositif commandé par processeur (18) via une interface PCMCIA.

4. Module de raccordement (16) selon l'une des revendications 1 à 3, **caractérisé par** des moyens (44, 50, 52) pour lire la mémoire (24) du module de raccordement (16) dans un procédé d'initialisation par le dispositif commandé par processeur (18) pendant la mise en marche (60).

5. Module de raccordement (16) selon l'une des revendications 1 à 4, **caractérisé en ce que** le dispositif commandé par processeur (18) est conçu comme un ordinateur (32, 34, 36, 38).

6. Module de raccordement (16) selon l'une des revendications 1 à 5, **caractérisé en ce qu'**un adaptateur de raccordement est prévu entre le dispositif commandé par processeur (18) et le module de raccordement (16).

7. Module de raccordement (16) selon l'une des revendications 1 à 6, **caractérisé en ce que** le module de raccordement (16) comprend une mémoire de données non volatile pour recevoir un système d'exploitation supplémentaire, OS, le système d'exploitation supplémentaire, OS, étant prévu alternativement au système d'exploitation, OS, pour le dispositif commandé par processeur (18).

8. Dispositif commandé par processeur (18), notamment un ordinateur (32, 34, 36, 38) comprenant un module de raccordement (16), ledit dispositif (18) comprenant une interface (42) pour recevoir le module de raccordement (16) pour relier le dispositif commandé par processeur (18) comme partenaire de communication à un autre partenaire de communication via un réseau radio mobile (10), le module de raccordement (16) comprenant une interface sans fil (26) avec le réseau radio mobile (10), une interface (20) avec le dispositif commandé par processeur (18) et une mémoire de données non volatile, qui comprend un système d'exploitation, OS, qui, après avoir été chargé dans une mémoire de travail (46) du dispositif commandé par processeur (18), assume la commande du dispositif commandé par processeur (18), **caractérisé en ce que** la mémoire de données non volatile comprend en outre au moins un profil utilisateur (NP) pour adapter le système d'exploitation, OS, aux besoins individuels d'un utilisateur, que le système d'exploitation chargé dans la mémoire de travail (46) du dispositif commandé par processeur (18) est configuré de manière correspondante au profil utilisateur (NP) et que le système d'exploitation, après avoir été chargé dans la mémoire de travail (46) du dispositif commandé par processeur (18), est adapté à assumer, outre la commande du dispositif commandé par processeur (18), aussi la commande de la connexion entre le module de raccordement (16) et le réseau radio mobile (10).

9. Dispositif commandé par processeur (18) selon la revendication 8, **caractérisé en ce que** l'interface est conçue comme une interface USB (42) et/ou PCMCIA.

10. Procédé de commande d'une connexion d'un dispositif commandé par processeur (18) avec un autre partenaire de communication via un réseau radio mobile (10) par moyen d'un module de raccordement (16) selon l'une des revendications 1 à 9, comprenant les étapes de:
(a) coupler le dispositif commandé par processeur (18) à un module de raccordement (16) via une interface (20, 42) :
(b) charger un système d'exploitation, OS, stocké dans le module de raccordement (16) dans une mémoire de travail (46) du dispositif commandé par processeur (18) et configurer simultanément le système d'exploitation, OS, de manière correspondante au profil utilisateur (NP) pendant un procédé d'initialisation du dispositif commandé par processeur (18) ;
(c) commander le dispositif commandé par processeur (18) et la connexion entre le module de raccordement (16) et le réseau radio mobile (10) par moyen du système d'exploitation, OS.
